# EUROPÄISCHE PATENTSCHRIFT

(11) **EP 4 149 820 B1**
(45) Veröffentlichungstag und Bekanntmachung des Hinweises auf die Patenterteilung: **01.10.2025**
(21) Anmeldenummer: 21726851.5
(22) Anmeldetag: 11.05.2021
(51) Int. Cl.: B62D 5/00, B62D 5/04, B60W 30/02, B60W 30/045

(54) **STEER-BY-WIRE-LENKSYSTEM FÜR EIN KRAFTFAHRZEUG**
STEER-BY-WIRE STEERING SYSTEM FOR A MOTOR VEHICLE
SYSTÈME DE DIRECTION À COMMANDE PAR CÂBLE POUR UN VÉHICULE À MOTEUR

(30) Priorität: 12.05.2020 DE 102020205904
(43) Veröffentlichungstag der Anmeldung: 22.03.2023
(73) Patentinhaber: thyssenkrupp Presta AG, 9492 Eschen (LI); thyssenkrupp AG, 45143 Essen (DE)
(72) Erfinder: KAKAS, Peter, 1118 Budapest (HU); SZEPESSY, Imre, 9493 Mauren (LI)
(74) Vertreter: thyssenkrupp Intellectual Property GmbH
(86) Internationale Anmeldenummer: PCT/EP2021/062397
(87) Internationale Veröffentlichungsnummer: WO 2021/228799

(56) Entgegenhaltungen:
- EP-A1- 3 141 458
- EP-A1- 3 305 625
- DE-A1- 10 248 343

## Beschreibung

### Stand der Technik

Die vorliegende Erfindung betrifft ein Steer-by-Wire-Lenksystem für ein Kraftfahrzeug, umfassend eine drehbar gelagerte Lenkspindel, einen Feedbackaktuator zur Einwirkung auf die Lenkspindel, einen Lenkungsaktuator mit einem Lenkungsmotor zur Einwirkung auf die gelenkten Räder des Kraftfahrzeugs in Abhängigkeit von der Drehung der Lenkspindel und zwei Steuereinheiten zur Ansteuerung des Feedbackmotors und des Lenkungsmotors. Des Weiteren betrifft die vorliegende Erfindung ein Verfahren zum Betreiben eines Steer-by-Wire-Lenksystems.

Bei Steer-by-Wire-Lenksystemen sind die gelenkten Räder des Kraftfahrzeugs nicht mechanisch mit dem Lenkeingabemittel bzw. der Lenkhandhabe, beispielsweise einem Lenkrad, gekoppelt. Die Stellung des Lenkrads wird daher nicht rein mechanisch auf die Stellung der gelenkten Räder übertragen. Vielmehr wird eine Lenkraddrehung auch über elektrische Signale in eine entsprechende Auslenkung der gelenkten Räder übertragen. Dazu umfasst ein Steer-by-Wire-Lenksystem eine Einrichtung zur Erfassung des Fahrerlenkwunsches bzw. des Lenkradeinschlags bzw. der Lenkraddrehung, insbesondere einen Lenkwinkelsensor, eine Einrichtung zur elektrischen Weiterleitung des erfassten Fahrerlenkwunsches, insbesondere ein Datenkabel oder ein Bus-System, und eine Einrichtung zur Umsetzung des elektrisch weitergeleiteten Fahrerlenkwunsches, insbesondere einen Lenkungsaktuator bzw. Lenksteller.

Es ist bekannt, die Steuereinheiten zur Ansteuerung des Feedbackmotors und des Lenkungsmotors, also insbesondere ein Feedbacksteuergerät und ein Lenkungssteuergerät, jeweils derart einzurichten, dass sie miteinander kommunizieren, das heißt Daten austauschen. Die bekannten Feedbacksteuergeräte und Lenkungssteuergeräte sind zueinander redundant ausgestaltet und ähneln einander bezüglich Aufbau und Funktion. Beispielhaft wird hierzu auf die DE 10 2004 005 348 A1 verwiesen.

Weiter ist aus der DE 102 48 343 A1 ein Steer-by-Wire-Lenksystem für ein Kraftfahrzeug bekannt, das einen Feedback-Aktuator mit einem Motor umfasst. Dieser Motor wird dabei von einer Zentralsteuereinheit angesteuert, wobei die Zentralsteuereinheit zwei redundante Rechner aufweist. Des Weiteren umfasst das Lenksystem zwei Stellaggregate, welche jeweils auf die gelenkten Räder einwirken können. Diesen Stellaggregaten ist jeweils eine Elektronikeinheit zugeordnet, die wiederum jeweils zwei Rechner umfasst. Die Zentralsteuereinheit und die Elektronikeinheiten sind dabei über einen CAN-Bus miteinander verbunden.

Darüber hinaus offenbaren die EP 3 305 625 A1 und die EP 3 141 458 A1 jeweils ein Steer-by-Wire-Lenksystem, wobei eine übergeordnete und eine untergeordnete Steuereinheit vorgesehen sind. Die übergeordnete Steuereinheit gibt dabei einen einzustellenden Lenkwinkel vor, wobei die untergeordnete Steuereinheit den Stellmotor auf Basis des von der übergeordneten Steuereinheit vorgegebenen Lenkwinkels ansteuert. In der EP 3 305 625 A1 wird zudem zwischen einem ersten Betriebsmodus und einem zweiten Betriebsmodus unterschieden, wobei im Fall einer Kommunikationsstörung das Steer-by-Wire-Lenksystem in dem zweiten Betriebsmodus betrieben wird.

Hiervon ausgehend ist es eine Aufgabe der vorliegenden Erfindung, ein kostengünstigeres Steer-by-Wire-Lenksystem zur Verfügung zu stellen. Vorteilhafterweise soll die Funktionalität dabei im Wesentlichen nicht reduziert werden.

### Darstellung der Erfindung

Zur Lösung der Aufgabe werden ein Steer-by-Wire-Lenksystem für ein Kraftfahrzeug und ein Verfahren zum Betreiben eines Steer-by-Wire-Lenksystems mit den Merkmalen der unabhängigen Ansprüche vorgeschlagen. Vorteilhafte Weiterbildungen ergeben sich aus den Unteransprüchen und der Beschreibung sowie den in den Figuren dargestellten Ausführungsbeispielen.

Das vorgeschlagene Steer-by-Wire-Lenksystem umfasst eine drehbar gelagerte Lenkspindel, einen Feedbackaktuator mit einem Feedbackmotor zur Einwirkung auf die Lenkspindel, einen Lenkungsaktuator mit einem Lenkungsmotor zur Einwirkung auf die gelenkten Räder des Kraftfahrzeugs in Abhängigkeit von der Drehung der Lenkspindel und zwei Steuereinheiten zur Ansteuerung des Feedbackmotors und des Lenkungsmotors wobei eine erste Steuereinheit der zwei Steuereinheiten und eine zweite Steuereinheit der zwei Steuereinheiten zueinander verschiedene Komplexitäten aufweisen. Insbesondere ist vorgesehen, dass die zwei Steuereinheiten ein Feedbacksteuergerät zur Ansteuerung des Feedbackmotors und ein Lenkungssteuergerät zur Ansteuerung des Lenkungsmotors sind. Gemäß einer vorteilhaften Ausgestaltung umfasst der Feedbackaktuator dabei das Feedbacksteuergerät. Gemäß einer weiteren vorteilhaften Ausgestaltung umfasst der Lenkungsaktuator dabei das Lenkungssteuergerät.

Vorteilhafterweise sind die erste Steuereinheit und die zweite Steuereinheit zum Austausch von Signalen miteinander verbunden, also insbesondere kommunikationstechnisch verbunden. Insbesondere ist dabei vorgesehen, dass die erste Steuereinheit ausgebildet ist, Signale an die zweite Steuereinheit zu senden und Signale von der zweiten Steuereinheit zu empfangen. Weiter ist insbesondere vorgesehen, dass die zweite Steuereinheit ausgebildet ist, Signale an die erste Steuereinheit zu senden und Signale von der ersten Steuereinheit zu empfangen. Vorteilhafterweise weisen die erste Steuereinheit und die zweite Steuereinheit dazu jeweils eine Kommunikationsschnittstelle auf. Insbesondere ist vorgesehen, dass die erste Steuereinheit und die zweite Steuereinheit über einen Kommunikationsbus erfolgt. Das Übertragen von Signalen zwischen der ersten Steuereinheit und der zweiten Steuereinheit kann dabei leitungsgebunden und/oder drahtlos erfolgen.

Durch die zueinander verschiedenen Komplexitäten der Steuereinheiten ist es möglich, das Steer-by-Wire-Lenksystem derart zu entwerfen, dass jeder Steuereinheit spezifische Aufgaben zugewiesen werden können. So kann jede Steuereinheit entsprechend seinen Anforderungen innerhalb des Steer-by-Wire-Lenksystems ausgewählt, dimensioniert oder konfiguriert werden. Hieraus resultieren Kostenvorteile, weil die Steuereinheiten insbesondere nicht gleich leistungsstark sein müssen, sondern eine der beiden Steuereinheiten vorteilhafterweise deutlich leistungsschwächer ausgebildet sein kann, als die andere Steuereinheit. Insbesondere bei einer kommunikationstechnischen Verbindung zwischen der ersten Steuereinheit und der zweiten Steuereinheit können dabei vorteilhafterweise Ausführungsschritte, insbesondere Rechenoperationen, für die Erzeugung von Ansteuerungssignalen von einer Steuereinheit in die andere Steuereinheit ausgelagert werden.

Der Feedbackaktuator des Steer-by-Wire-Lenksystems dient insbesondere zur Eintragung eines Drehmoments in die Lenkspindel, wobei das Drehmoment von den auf die gelenkten Fahrzeugräder einwirkenden mechanischen Belastungen abhängig ist. Zu diesen mechanischen Belastungen zählen beispielsweis Reibungskräfte zwischen den Fahrzeugrädern und der Fahrbahn, wobei diese abhängig vom Straßenbelag und Bodenbeschaffenheit ist, und Stößen aufgrund von Bodenwellen und Schlaglöchern.

Der Lenkungsaktuator des Steer-by-Wire-Lenksystems dient insbesondere zur Verstellung des Winkels der gelenkten Fahrzeugräder, in Abhängigkeit von der Drehung der Lenkspindel, das heißt in Abhängigkeit des Lenkbefehls.

In vorteilhafter Weise weisen die erste Steuereinheit und die zweite Steuereinheit zueinander verschiedene Softwarekomplexitäten und/oder Hardwarekomplexitäten auf. Der Begriff Software umfasst die Begriffe Computerprogramm und Quellcode.

Die Softwarekomplexität kann definiert sein als eine auf einer Metrik basierende Maßzahl, wobei die Metrik eine auf Software anwendbare, Software in Form einer Maßzahl quantifizierende Funktion ist, wobei die Maßzahl eine Eigenschaft von Software abbildet. Die quantifizierende Funktion ist insbesondere eine mathematische Funktion. Die Eigenschaften von Software sind insbesondere die Größe des Quellcodes, vorzugsweise die Anzahl der Zeilen oder Zeichen des Quellcodes, der Funktionsumfang des Quellcodes, die Wartbarkeit des Quellcodes, die Erweiterbarkeit des Quellcodes und/oder die Verständlichkeit des Quellcodes. Beispiele hierfür umfassen die Chapins-Data-Metrik, die Elshofs-Data-Flow-Metrik, die Cards-Data-Access-Metrik, die Henrys-Interface-Metrik, die McCabe-Metrik bzw. zyklomatische Komplexität, die McClures-Decision-Metrik, die Sneeds-Branching-Metrik und die Halstead-Metrik.

Alternativ kann die Softwarekomplexität als eine auf dem algorithmischen Informationsgehalt von Software basierende Maßzahl definiert sein. Ein Beispiel hierfür ist die Kolmogorow-Komplexität bzw. algorithmische Komplexität bzw. Beschreibungskomplexität. Weiter alternativ kann die Softwarekomplexität definiert sein als eine auf dem Ressourcenverbrauch von Software, insbesondere die Anzahl von Rechenoperationen, die Rechenzeit, der Speicherplatz und/oder die elektrische Leistungsaufnahme, basierende Maßzahl. Noch weiter alternativ kann die Softwarekomplexität als eine auf dem Funktionsumfang von Software, insbesondere die Funktionalität, die Anzahl der möglichen Eingabesignale und/oder die Anzahl der möglichen Ausgabesignale, basierende Maßzahl definiert sein. Es ist auch denkbar und möglich, die Softwarekomplexität als eine Kombination zweier oder mehrerer der vorgenannten Definitionen von Softwarekomplexität zu definieren.

Die Hardwarekomplexität kann definiert sein als eine Maßzahl, die anhängig ist von der Anzahl von Bauelementen, insbesondere Speichereinheiten, Schalter, Filter und Recheneinheiten, insbesondere Prozessoren, innerhalb einer Steuereinheit. Insbesondere ist vorgesehen, dass die erste Steuereinheit eine leistungsfähigere Hardware umfasst, als die zweite Steuereinheit.

In weiter vorteilhafter Weise sind die zueinander verschiedenen Komplexitäten der ersten Steuereinheit und der zweiten Steuereinheit durch zueinander verschiedene rechentechnische Leistungsfähigkeiten oder Effizienzen ausgebildet. Eine vorteilhafte Ausgestaltung sieht vor, dass die erste Steuereinheit eine erste Recheneinheit umfasst und die zweite Steuereinheit eine zweite Recheneinheit umfasst, wobei die erste Recheneinheit ausgebildet ist, mehr Rechenoperationen pro Zeiteinheit auszuführen als die zweite Recheneinheit. Hierdurch ergeben sich Kostenvorteile im Hinblick auf die zweite Steuereinheit.

Weiter vorteilhaft ist vorgesehen, dass die erste Steuereinheit zur Ausführung einer High-Level-Software ausgebildet ist und die zweite Steuereinheit zur Ausführung einer Low-Level-Software ausgebildet ist. Die zweite Steuereinheit ist dabei insbesondere nicht zur Ausführung einer High-Level-Software ausgebildet. Auch hierdurch lässt sich zweite Steuereinheit kostengünstiger realisieren.

Eine weiter vorteilhafte Ausgestaltung sieht vor, dass die erste Steuereinheit in die Bestimmung eines Motorsteuersignals zur Ansteuerung des Feedbackmotors und des Lenkungsmotors eingebunden ist, und die zweite Steuereinheit in die Bestimmung eines Motorsteuersignals zur Ansteuerung des Feedbackmotors oder des Lenkungsmotors eingebunden ist. Die zweite Steuereinheit führt dabei insbesondere ausschließlich niedere Operationen im Vergleich zu der ersten Steuereinheit aus. Vorteilhafterweise bearbeitet die zweite Steuereinheit, die insbesondere leistungsschwächer ausgebildet ist, als die erste Steuereinheit, empfangene Signale, insbesondere Signale von Winkelsensoren, Drehmomentsensoren, Strommesssignale und/oder Spannungssignale. Insbesondere kann eine Analog-Digital-Wandlung dieser Signale durch die zweite Steuereinheit vorgesehen sein. Die Signale werden dann vorteilhafterweise von der zweiten Steuereinheit an die erste Steuereinheit für eine weitere Verwendung, insbesondere ein weiteres Bearbeiten, weitergegeben. Vorteilhafterweise ist die erste Steuereinheit ebenfalls ausgebildet, empfangene Signale, insbesondere Signale von Winkelsensoren, Drehmomentsensoren, Strommesssignale und/oder Spannungssignale, zu bearbeiten und insbesondere analoge Signale in digitale Signale zu wandeln. Diese Signale sowie die von der zweiten Steuereinheit weitergegebenen Signale werden vorteilhafterweise von der ersten Steuereinheit bearbeitet, insbesondere zur Generierung von Steuersignalen für den Feedbackmotor des Feedbackaktuators und den Lenkungsmotor des Lenkungsaktuators.

Erfindungsgemäß ist vorgesehen, dass die erste Steuereinheit ausgebildet ist, erste Sensorsignale zu empfangen, insbesondere Signale von wenigstens einem Winkelsensor und/oder wenigstens einem Drehmomentsensor, die ersten Sensorsignale aufzubereiten, insbesondere durch eine Analog-Digital-Wandung, und aus den aufbereiteten ersten Sensorsignalen ein erstes Motorsteuersignal zu bestimmen. Je nach Zuordnung der ersten Steuereinheit und der zweiten Steuereinheit ist das erste Motorsteuersignal ein Steuersignal für den Feedbackmotor des Feedbackaktuators oder ein Steuersignal für den Lenkungsmotor des Lenkungsaktuators. Die zweite Steuereinheit ist dabei erfindungsgemäß ausgebildet, zweite Sensorsignale, insbesondere Signale von wenigstens einem weiteren Winkelsensor und/oder wenigstens einem weiteren Drehmomentsensor, zu empfangen, aufzubereiten, insbesondere durch eine Analog-Digital-Wandung, und die aufbereiteten zweiten Sensorsignale an die erste Steuereinheit weiterzuleiten. Erfindungsgemäß ist die erste Steuereinheit dabei weiter ausgebildet, die aufbereiteten zweiten Sensorsignale zu empfangen und aus den aufbereiteten zweiten Sensorsignalen ein zweites Motorsteuersignal zu bestimmen. Je nach Zuordnung der ersten Steuereinheit und der zweiten Steuereinheit ist das zweite Motorsteuersignal ein Steuersignal für den Lenkungsmotor des Lenkungsaktuators oder ein Steuersignal für den Feedbackmotor des Feedbackaktuators. Weiter vorteilhaft ist die erste Steuereinheit zudem ausgebildet, das bestimmte zweite Motorsteuersignal an die zweite Steuereinheit weiterzuleiten. Die zweite Steuereinheit ist dabei insbesondere ausgebildet, das zweite Motorsteuersignal zu empfangen und zur Steuerung des Lenkungsmotors des Lenkungsaktuators beziehungsweise zur Steuerung des Feedbackmotors des Feedbackaktuators bereitzustellen.

Es kann vorgesehen sein, dass die erste Steuereinheit ferner ausgebildet ist, bei einem Ausfall der zweiten Steuereinheit die Funktion der zweiten Steuereinheit zu übernehmen. Insbesondere ist dabei vorgesehen, dass die erste Steuereinheit in diesem Fall sowohl den Feedbackmotor des Feedbackaktuators als auch den Lenkungsmotor des Lenkungsaktuators ansteuert.

Gemäß einer Ausgestaltung ist vorgesehen, dass die erste Steuereinheit zur Ansteuerung des Feedbackmotors ausgebildet ist und die zweite Steuereinheit zur Ansteuerung des Lenkungsmotors ausgebildet ist. Vorteilhafterweise umfasst die erste Steuereinheit dabei eine Feedbackplattformsoftware, eine Feedbackanwendungssoftware und eine Lenkungsanwendungssoftware. Die zweite Steuereinheit umfasst dabei insbesondere eine Lenkungsplattformsoftware. Insbesondere umfasst die zweite Steuereinheit dabei keine Feedbackplattformsoftware, keine Feedbackanwendungssoftware und keine Lenkungsanwendungssoftware.

Eine Ausgestaltungsvariante sieht vor, dass die erste Steuereinheit zur Ansteuerung des Lenkungsmotors ausgebildet ist und die zweite Steuereinheit zur Ansteuerung des Feedbackmotors ausgebildet ist. Vorteilhafterweise umfasst die erste Steuereinheit dabei eine Lenkungsplattformsoftware, eine Lenkungsanwendungssoftware und eine Feedbackanwendungssoftware. Die zweite Steuereinheit umfasst dabei insbesondere eine Feedbackplattformsoftware. Insbesondere umfasst die zweite Steuereinheit dabei keine Lenkungsplattformsoftware, keine Lenkungsanwendungssoftware und keine Feedbackanwendungssoftware.

Die Feedbackplattformsoftware und die Lenkungsplattformsoftware sind vorteilhafterweise jeweils dazu ausgebildet, hardwarenahe, benutzerferne Anweisungen umzusetzen. Die Feedbackanwendungssoftware und die Lenkungsanwendungssoftware sind vorteilhafterweise jeweils dazu ausgebildet, hardwareferne, benutzernahe Anweisungen umzusetzen. Insbesondere ist vorgesehen, dass die Feedbackplattformsoftware und die Lenkungsplattformsoftware eine Low-Level-Software sind. Weiter ist insbesondere vorgesehen, dass die Feedbackanwendungssoftware und die Lenkungsanwendungssoftware High-Level-Software sind.

Gemäß einer Ausführungsform, bei der die Steuereinheiten als Feedbacksteuergerät und Lenkungssteuergerät ausgebildet sind, weist das Feedbacksteuergerät eine geringere Komplexität auf als das Lenkungssteuergerät. Das Feedbacksteuergerät kann derart ausgebildet sein, Aufgaben aus einem kleineren und/oder weniger rechenintensiven Aufgabenbereich zu übernehmen. Das Lenkungssteuergerät kann dagegen derart ausgebildet sein, Aufgaben aus einem größeren und/oder rechenintensiveren Aufgabenbereich zu übernehmen.

Vorteilhafterweise umfasst das Feedbacksteuergerät eine Feedbackplattformsoftware und umfasst das Lenkungssteuergerät eine Lenkungsplattformsoftware sowie eine Lenkungsanwendungssoftware.

Die Feedbackplattformsoftware und die Lenkungsplattformsoftware können jeweils dazu ausgebildet sein, hardwarenahe, benutzerferne Anweisungen des Lenkungssteuergeräts umzusetzen. Die Feedbackplattformsoftware und die Lenkungsplattformsoftware können in Bezug auf die Softwarearchitektur jeweils eine Software sein, die niederrangiger ist, als Anwendungssoftware, insbesondere als die Lenkungsanwendungssoftware. Die hardwarenahen, benutzerfernen Anweisungen des Lenkungssteuergeräts können in Abhängigkeit von Sensorwerten umgesetzt werden, welche den Lenkbefahl, insbesondere Lenkbefehldrehwinkel und Lenkbefehldrehmomente, abbilden. Auch ist es insbesondere vorgesehen, ein Lenkbefehldrehmoment zu berechnen und den Lenkungsmotor entsprechend dem Lenkbefehldrehmoment anzusteuern.

Die Lenkungsanwendungssoftware kann dazu ausgebildet sein, hardwareferne, benutzernahe Anweisungen des Lenkungssteuergeräts umzusetzen. Die Lenkungsanwendungssoftware kann in Bezug auf die Softwarearchitektur eine Software sein, die höherrangiger ist als Plattformsoftware, insbesondere als die Feedbackplattformsoftware und die Lenkungsplattformsoftware.

Gemäß einer weiteren Ausführungsform weist das Lenkungssteuergerät eine geringere Komplexität auf als das Feedbacksteuergerät. Das Lenkungssteuergerät kann derart ausgebildet sein, Aufgaben aus einem kleineren und/oder weniger rechenintensiven Aufgabenbereich zu übernehmen. Das Feedbacksteuergerät kann dagegen derart ausgebildet sein, Aufgaben aus einem größeren und/oder rechenintensiveren Aufgabenbereich zu übernehmen.

Vorteilhafterweise umfasst das Lenkungssteuergerät eine Lenkungsplattformsoftware und umfasst das Feedbacksteuergerät eine Feedbackplattformsoftware sowie eine Feedbackanwendungssoftware.

Die Lenkungsplattformsoftware und die Feedbackplattformsoftware können jeweils dazu ausgebildet sein, hardwarenahe, benutzerferne Anweisungen des Feedbacksteuergeräts umzusetzen. Die Lenkungsplattformsoftware und die Feedbackplattformsoftware können in Bezug auf die Softwarearchitektur jeweils eine Software sein, die niederrangiger ist als Anwendungssoftware, insbesondere als die Feedbackanwendungssoftware. Die hardwarenahen, benutzerfernen Anweisungen des Feedbacksteuergeräts können in Abhängigkeit von Sensorwerten umgesetzt werden, welche die auf die Fahrzeugräder einwirkenden, mechanischen Belastungen, insbesondere Kräfte und Drehmomente, abbilden. Auch ist es insbesondere vorgesehen, ein Feedbackdrehmoment zu berechnen und den Feedbackmotor entsprechend dem Feedbackdrehmoment anzusteuern.

Die Feedbackanwendungssoftware kann dazu ausgebildet sein, hardwareferne, benutzernahe Anweisungen des Feedbacksteuergeräts umzusetzen. Die Feedbackanwendungssoftware kann in Bezug auf die Softwarearchitektur eine Software sein, die höherrangiger ist als Plattformsoftware, insbesondere als die Lenkungsplattformsoftware und die Feedbackplattformsoftware.

In bevorzugter Weise sind das Feedbacksteuergerät und das Lenkungssteuergerät jeweils dazu ausgebildet sind, Informationen auszutauschen. Das Feedbacksteuergerät und das Lenkungssteuergerät tauschen Informationen vorzugsweise über eine Informationsschnittstelle aus.

Weiter vorteilhaft ist vorgesehen, dass die erste Steuereinheit eine Schnittstelle zum Anschließen der ersten Steuereinheit an einen Kommunikationsbus eines Kraftfahrzeugs aufweist. Von der ersten Steuereinheit und der zweiten Steuereinheit ist dabei vorteilhafterweise ausschließlich die erste Steuereinheit ausgebildet, über den Kommunikationsbus Signale auszutauschen, insbesondere Signale mit weiteren Steuereinheiten des Kraftfahrzeugs und/oder weiteren Signalgebern des Kraftfahrzeugs.

Außerdem weisen bevorzugterweise der Feedbackmotor und der Lenkungsmotor jeweils eine oder mehrere Spulen auf.

Das zur Lösung der der vorliegenden Erfindung zugrundeliegenden Aufgabe ebenfalls vorgeschlagene Verfahren zum Betreiben eines Steer-by-Wire-Lenksystems, insbesondere eines erfindungsgemäß ausgebildeten Steer-by-Wire-Lenksystems, sieht vor, dass die erste Steuereinheit und die zweite Steuereinheit zueinander verschieden komplexe Prozeduren ausführen. Insbesondere sind ein Feedbacksteuergerät und ein Lenkungssteuergerät als Steuereinheiten vorgesehen, wobei das Feedbacksteuergerät und das Lenkungssteuergerät zueinander verschieden komplexe Prozeduren ausführen.

Gemäß einer Ausführungsform führt das Lenkungssteuergerät sämtliche Rechnungen des Feedbacksteuergeräts und des Lenkungssteuergeräts durch, wobei das Feedbacksteuergerät die von dem Lenkungssteuergerät berechneten Ergebnisse empfängt und ausführt.

Gemäß einer weiteren Ausführungsform führt das Feedbacksteuergerät sämtliche Rechnungen des Lenkungssteuergeräts und des Feedbacksteuergeräts durch, wobei das Lenkungssteuergerät die von dem Feedbacksteuergerät berechneten Ergebnisse empfängt und ausführt.

Erfindungsgemäß ist vorgesehen, dass die erste Steuereinheit sämtliche Rechnungen für die Bestimmung eines ersten Motorsteuersignals und sämtliche Rechnungen für die Bestimmung eines zweiten Motorsteuersignals durchführt. Die erste Steuereinheit leitet die Ergebnisse der Rechnungen für die Bestimmung des zweiten Motorsteuersignals an die zweite Steuereinheit weiter. Die zweite Steuereinheit, die diese Rechnungen nicht ausführt, also insbesondere nicht sämtliche Rechnungen für die Bestimmung eines ersten Motorsteuersignals und sämtliche Rechnungen für die Bestimmung eines zweiten Motorsteuersignals, empfängt stattdessen die Ergebnisse der Rechnungen für die Bestimmung des zweiten Motorsteuersignals und stellt das zweite Motorsteuersignal bereit, insbesondere zur Ansteuerung des Feedbackmotors beziehungsweise des Lenkungsmotors.

Gemäß einer vorteilhaften Ausgestaltung der Erfindung empfängt die erste Steuereinheit erste Sensorsignale, bereitet die erste Steuereinheit vorteilhafterweise die ersten Sensorsignale auf und bestimmt die erste Steuereinheit vorteilhafterweise aus den aufbereiteten ersten Sensorsignalen ein erstes Motorsteuersignal. Die zweite Steuereinheit empfängt vorteilhafterweise zweite Sensorsignale. Insbesondere bereitet die zweite Steuereinheit die empfangenen Sensorsignale auf und leitet die aufbereiteten zweiten Sensorsignale vorteilhafterweise an die erste Steuereinheit weiter. Weiter vorteilhaft empfängt die erste Steuereinheit dann die aufbereiteten zweiten Sensorsignale und bestimmt vorteilhafterweise aus den aufbereiteten zweiten Sensorsignalen ein zweites Motorsteuersignal. Vorteilhafterweise leitet die erste Steuereinheit das bestimmte zweite Motorsteuersignal dann an die zweite Steuereinheit weiter. Die zweite Steuereinheit steuert dann vorteilhafterweise mit dem empfangenen zweiten Motorsteuersignal den Feedbackmotor beziehungsweise den Lenkungsmotor an. Mit dem ersten Motorsteuersignal steuert entsprechend die erste Steuereinheit vorteilhafterweise den Lenkungsmotor beziehungsweise den Feedbackmotor an.

Insbesondere ist als Ausgestaltung vorgesehen, dass die erste Steuereinheit dem Feedbackaktuator zugeordnet ist und die zweite Steuereinheit dem Lenkungsaktuator zugeordnet ist, wobei das erste Motorsteuersignal ein Signal zur Steuerung des Feedbackmotors ist und das zweite Motorsteuersignal ein Signal zur Steuerung des Lenkungsmotors ist.

Als weiter Ausgestaltung ist vorgesehen, dass die erste Steuereinheit dem Lenkungsaktuator zugeordnet ist und die zweite Steuereinheit dem Feedbackaktuator zugeordnet ist, wobei das erste Motorsteuersignal ein Signal zur Steuerung des Lenkungsmotors ist und das zweite Motorsteuersignal ein Signal zur Steuerung des Feedbackmotors ist.

### Beschreibung der Zeichnung

Vorteilhafte Ausführungsformen und Ausgestaltungsdetails der Erfindung sind im Folgenden anhand der Figuren (Fig.: Figur) näher erläutert. Im Einzelnen zeigen
- Fig. 1: eine Ausführungsform eines erfindungsgemäßen Steer-by-Wire-Lenksystems in einer perspektivischen, schematischen Darstellung,
- Fig. 2: das Steer-by-Wire-Lenksystem aus Fig. 1 in Form eines stark vereinfachten Blockdiagramms und
- Fig. 3 a, b: weitere Ausführungsformen eines erfindungsgemäßen Steer-by-Wire-Lenksystems jeweils in Form eines stark vereinfachten Blockdiagramms.

### Vorteilhafte Ausführungsformen der Erfindung

In den verschiedenen Figuren (sind gleiche Teile stets mit den gleichen Bezugszeichen versehen und sind daher in der Regel jeweils nur einmal benannt bzw. erwähnt.

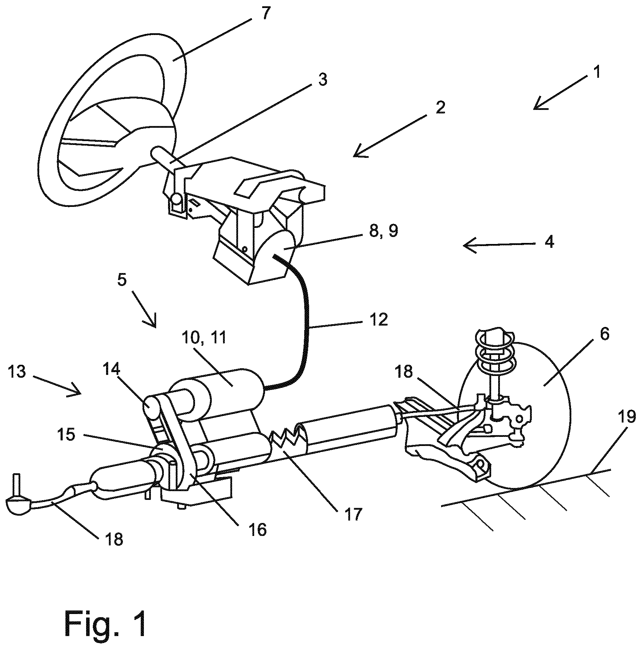

Fig. 1 zeigt eine Ausführungsform eines erfindungsgemäß ausgebildeten Steer-by-Wire-Lenksystems 1 in einer perspektivischen, schematischen Darstellung von schräg vorne in Fahrzeugfahrtrichtung, wobei der verbesserten Übersicht halber für die Beschreibung der Erfindung nicht wesentliche Bestandteile nicht dargestellt sind.

Das für ein Kraftfahrzeug, insbesondere für einen PKW (PKW: Personenkraftwagen) geeignete Steer-by-Wire-Lenksystem 1 umfasst eine Lenksäule 2, in der eine Lenkspindel 3 drehbar gelagert ist, einen Feedbackaktuator 4 zur Einwirkung auf die Lenkspindel 3 und einen Lenkungsaktuator 5 zur Einwirkung auf die gelenkten Räder 6 des Kraftfahrzeugs in Abhängigkeit von der Drehung der Lenkspindel 2. An dem dem Fahrer zugewandten Ende der Lenkspindel 3 ist ein Lenkrad 7 zur Eingabe eines Fahrerlenkwunsches befestigt. Der Feedbackaktuator 4 weist einen Feedbackmotor 8 und ein Feedbacksteuergerät 9 zur Ansteuerung des Feedbackmotors 8 auf. Der Lenkungsaktuator 5 weist einen Lenkungsmotor 10 und ein Lenkungssteuergerät 11 zur Ansteuerung des Lenkungsmotors 10 auf.

Zur Ermöglichung eines Datenaustauschs zwischen dem Feedbackaktuator 4, insbesondere dem Feedbacksteuergerät 9, und dem Lenkungsaktuator 5, insbesondere dem Lenkungssteuergerät 11, verbindet eine als Datenkabel ausgebildete Datenübertragungseinrichtung 12 den Feedbackaktuator 4 mit dem Lenkungsaktuator 5. Die Datenübertragungseinrichtung 12 überträgt Daten bidirektional, das heißt sowohl ausgehend von dem Feedbackaktuator 4 in Richtung des Lenkungsaktuators 5 (Lenkwunschrichtung) als auch - umgekehrt - ausgehend von dem Lenkungsaktuator 5 in Richtung des Feedbackaktuators 4 (Feedbackrichtung).

In Lenkwunschrichtung kann der Lenkwunsch des Fahrers an bzw. in der Lenksäule 2 sensorisch erfasst werden. Die Sensordaten betreffen insbesondere den Lenkwinkel und das Lenkdrehmoment. Die Sensordaten können über die Datenübertragungseinrichtung 12 an den als Stellglied fungierenden Lenkungsaktuator 5 übertragen werden.

Ein Riemengetriebe 13 ist mit dem Lenkungsaktuator 5 wirkverbunden und an diesen angeordnet. Das Riemengetriebe 13 umfasst ein Riemenantriebsrad 14, ein Riemenabtriebsrad 15 sowie einen das Riemenantriebsrad 14 mit dem Riemenabtriebsrad 15 verbindenden, das heißt mechanisch koppelnden, Treibriemen 16. Der Treibriemen 16 ist ein Zahnriemen, wobei auch andere Riemenarten verwendet werden können, beispielsweise Flachriemen oder Keilriemen. Das Riemenabtriebsrad 15 ist drehfest mit einem Schraubgetriebe zur Übersetzung einer rotatorischen Bewegung in eine translatorische Bewegung gekoppelt. Das Schraubgetriebe ist ein Kugelgewindetrieb, wobei auch andere Schraubgetriebearten eingesetzt werden können

Der Lenkungsmotor 10 treibt das Riemenantriebsrad 14 rotatorisch an, sodass das Riemenantriebsrad 14 über den Treibriemen 16 das Riemenabtriebsrad 15 in Rotation versetzt, sodass das Riemenabtriebsrad 15 über das Schraubgetriebe eine Koppelstange 17 in eine Translation entlang deren Längsachse versetzt. Die sich entlang ihrer Längsachse linear bewegende Koppelstange 17 ist jeweils zu beiden Seiten des Kraftfahrzeugs mechanisch mit einer Spurstange 18 gekoppelt. Die Spurstangen 18 sind wiederum jeweils mit den Fahrzeugrädern 6 mechanisch gekoppelt. Durch die beschriebene elektromechanische Verbindung kann ein eingebrachter Fahrerlenkwunsch auf die Fahrzeugräder 6 übertragen werden.

In Feedbackrichtung können mechanische Informationen an bzw. in dem Lenkungsaktuator 5, dem Riemengetriebe 13, dem Schraubgetriebe, der Koppelstange 17, den Spurstangen 18 und/oder den Fahrzeugrädern 6 sensorisch erfasst werden. Dabei kann es sich beispielsweise um durch Wellen, Schlaglöcher und/oder Rauheit einer Straße 19 auf die vorgenannten Strukturen während der Fahrt erzeugte Vibrationen sowie um einen durch den Straßenbelag, die Straßenneigung und/oder durch Kurvenfahrt erzeugten mechanischen Widerstand während des Lenkens handeln. Durch haptisches bzw. taktiles Feedback, das heißt durch Beaufschlagung der Lenkspindel 3 mit den mechanischen Informationen entsprechenden Drehmomenten (Feedbackdrehmomente), kann dem Fahrer ein Eindruck von der Beschaffenheit des Straßenbelags vermittelt werden.

Das Feedbacksteuergerät 9 und das Lenkungssteuergerät 11 weisen zueinander verschiedene Komplexitäten auf.

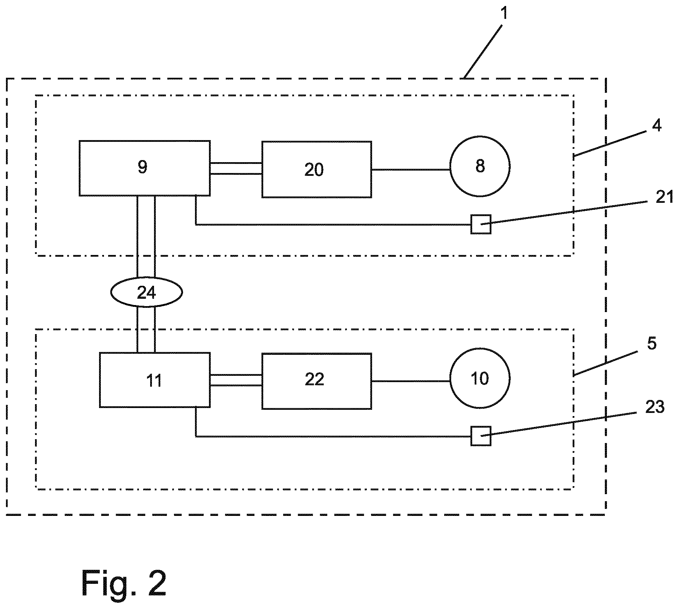

Fig. 2 zeigt das Steer-by-Wire-Lenksystem 1 aus Fig. 1 in Form eines stark vereinfachten Blockdiagramms.

Wie im Zusammenhang mit Fig. 1 beschrieben, umfasst das Steer-by-Wire-Lenksystem 1 den Feedbackaktuator 4 und den Lenkungsaktuator 5, wobei der Feedbackaktuator 4 den Feedbackmotor 8 und das Feedbacksteuergerät 9 aufweist, und wobei der Lenkungsaktuator 5 den Lenkungsmotor 10 und das Lenkungssteuergerät 11 aufweist.

Der Feedbackmotor 8 dient zur Eintragung von Feedbackdrehmomenten in die Lenkspindel 3, die in Fig. 2 nicht dargestellt ist. Der Feedbackaktuator 4 weist weiter einen Feedbackinverter 20 und einen Feedbacksensor 21 auf. Der Feedbackinverter 20 verbindet den Feedbackmotor 8 und das Feedbacksteuergerät 9 elektrisch miteinander und dient als zwischengeschaltete Leistungsstufe bei der Ansteuerung des Feedbackmotors 8 durch das Feedbacksteuergerät 9. Der Feedbacksensor 21 ist dazu eingerichtet, den Zustand des Feedbackmotors 8 zu überwachen und Informationen bezüglichen des Zustands des Feedbackmotors 8 an das Feedbacksteuergerät 9 zu übermitteln.

Der Lenkungsmotor 10 dient zur Erzeugung von Fahrerlenkwunschdrehmomenten, das heißt von Drehmomenten, die den sensorisch erfassten Fahrerlenkwünschen entsprechen. Durch die mechanische Kopplung des Riemenantriebsrads 14 mit der Koppelstange 17 wird ein erzeugtes Fahrerlenkwunschdrehmoment in eine Linearbewegung der Koppelstange 17 umgesetzt. Durch die mechanische Kopplung der Koppelstange 17 wiederum mit den gelenkten Rädern 6 werden die Räder 6 entsprechend dem Fahrerlenkwunsch ausgelenkt. Der Lenkungsaktuator 5 weist weiter einen Lenkungsinverter 22 und einen Lenkungssensor 23 auf. Der Lenkungsinverter 22 verbindet den Lenkungsmotor 10 und das Lenkungssteuergerät 11 elektrisch miteinander und dient als zwischengeschaltete Leistungsstufe bei der Ansteuerung des Lenkungsmotors 10 durch das Lenkungssteuergerät 11. Der Lenkungssensor 23 ist dazu eingerichtet, den Zustand des Lenkungsmotors 10 zu überwachen und Informationen bezüglichen den Zustand des Lenkungsmotors 10 an das Lenkungssteuergerät 11 zu übermitteln.

Das Feedbacksteuergerät 9 und das Lenkungssteuergerät 11 sind jeweils dazu ausgebildet, Informationen auszutauschen, und zwar über eine Informationsschnittstelle 24. Das Feedbacksteuergerät 9 empfängt erste Signale von einem nicht explizit dargestellten Drehmomentsensor und einem ebenfalls nicht explizit dargestellten Drehwinkelsensor. Das Feedbacksteuergerät 9 bereitet diese ersten Signale auf und bestimmt aus den aufbereiteten ersten Signalen ein Steuersignal für den Feedbackmotor 8. Das Lenkungssteuergerät 11 empfängt zweite Signale von einem ebenfalls nicht explizit dargestellten Drehmomentsensor und einem ebenfalls nicht explizit dargestellten Drehwinkelsensor. Das Lenkungssteuergerät 11 bereitet die empfangenen zweiten Signale auf und leitet diese über die Informationsschnittstelle 24 an das Feedbacksteuergerät 9 weiter. Das Feedbacksteuergerät 9 empfängt die aufbereiteten zweiten Signale über die Informationsschnittstelle 24 und bestimmt aus diesen ein Steuersignal zur Ansteuerung des Lenkungsmotors 10. Das Feedbacksteuergerät 9 leitet das Steuersignal zur Ansteuerung des Lenkungsmotors 10 über die Informationsschnittstelle 24 an das Lenkungssteuergerät 11 weiter, welches das Steuersignal zur Ansteuerung des Lenkungsmotors 10 empfängt. Mit dem empfangenen Steuersignal zur Ansteuerung des Lenkungsmotors 10 steuert das Lenkungssteuergerät 11 den Lenkungsmotor 10. Das Feedbacksteuergerät 9 steuert den Feedbackmotor 8 mit dem bestimmten Steuersignal für den Feedbackmotor 8. Das Lenkungssteuergerät 11 weist insofern eine geringere Komplexität als das Feedbacksteuergerät 9 auf, weil das Lenkungssteuergerät 11 selbst nicht zur Bestimmung des Steuersignals zur Ansteuerung des Lenkungsmotors 10 ausgebildet ist.

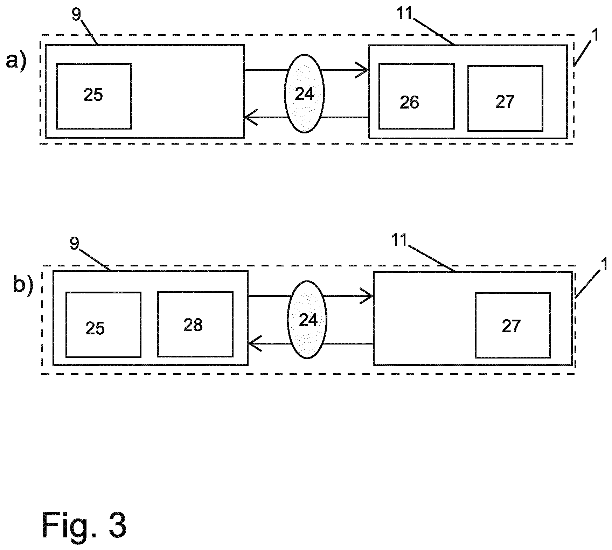

Fig. 3 a) zeigt eine weitere Ausführungsform eines erfindungsgemäßen Steer-by-Wire-Lenksystems 1 in Form eines stark vereinfachten Blockdiagramms.

Wie im Zusammenhang mit Fig. 1 und Fig. 2 beschrieben, umfasst das Steer-by-Wire-Lenksystem 1 das Feedbacksteuergerät 9 und das Lenkungssteuergerät 11. Das Feedbacksteuergerät 9 und das Lenkungssteuergerät 11 sind jeweils dazu ausgebildet, Informationen auszutauschen, und zwar über die Informationsschnittstelle 24.

Im Gegensatz zu bekannten Steer-by-Wire-Lenksystemen, bei denen die Feedbacksteuergeräte und die Lenkungssteuergeräte im Wesentlichen identisch komplex in Bezug auf Aufbau und Funktion sind, insbesondere eine im Wesentlichen identische Softwarekomplexität aufweisen, weiter insbesondere beide sowohl eine Anwendungssoftware als auch eine Plattformsoftware aufweisen, weisen das Feedbacksteuergerät 9 und das Lenkungssteuergerät 11 zueinander verschiedene Softwarekomplexitäten auf. Und zwar weist das Feedbacksteuergerät 9 eine geringere Softwarekomplexität auf als das Lenkungssteuergerät 11. Das Feedbacksteuergerät 9 umfasst eine Feedbackplattformsoftware 25. Das Lenkungssteuergerät 11 umfasst dagegen sowohl eine Lenkungsanwendungssoftware 26 als auch eine Lenkungsplattformsoftware 27. Die Feedbackplattformsoftware 25 und die Lenkungsplattformsoftware 27 sind jeweils dazu ausgebildet, hardwarenahe, benutzerferne Anweisungen umzusetzen. Zu diesem Zweck sind die Feedbackplattformsoftware 25 und die Lenkungsplattformsoftware 27 jeweils dazu ausgebildet, Anweisungen der Lenkungsanwendungssoftware 26 umzusetzen. Die Lenkungsanwendungssoftware 26 ist dazu ausgebildet, hardwareferne, benutzernahe Anweisungen umzusetzen. Insbesondere umfasst die Lenkungsanwendungssoftware 26 auch die Funktionen einer Feedbackanwendungssoftware, sodass mittels der Lenkungsanwendungssoftware 26 vorteilhafterweise ein Signal zur Ansteuerung des Feedbackmotors 8 berechnet wird. Im Gegensatz zu bekannten Steer-by-Wire-Lenksystemen, bei denen jedes Steuergerät eine eigene, an die Anforderungen des jeweiligen Steuergeräts angepasste Anwendungssoftware aufweist, fungiert die Lenkungsanwendungssoftware 26 als die gemeinsame Anwendungssoftware des Feedbackaktuators 4 und des Lenkungsaktuators 5. Dadurch, dass die beiden Steuergeräte 9, 11 über die Informationsschnittstelle 24 miteinander verbunden sind, bedarf es lediglich einer einzigen Anwendungssoftware, nämlich in dieser Ausführung der Lenkungsanwendungssoftware 26.

Fig. 3 b) zeigt eine weitere Ausführungsform eines erfindungsgemäßen Steer-by-Wire-Lenksystems 1 in Form eines stark vereinfachten Blockdiagramms.

Das Feedbacksteuergerät 9 und das Lenkungssteuergerät 11 weisen zueinander verschiedene Softwarekomplexitäten auf. Und zwar weist das Lenkungssteuergerät 11 eine geringere Softwarekomplexität auf als das Feedbacksteuergerät 9. Das Lenkungssteuergerät 11 umfasst eine Lenkungsplattformsoftware 27. Das Feedbacksteuergerät 9 umfasst dagegen sowohl eine Feedbackplattformsoftware 25 als auch eine Feedbackanwendungssoftware 28. Die Feedbackplattformsoftware 25 und die Lenkungsplattformsoftware 27 sind jeweils dazu ausgebildet, hardwarenahe, benutzerferne Anweisungen umzusetzen. Zu diesem Zweck sind die Feedbackplattformsoftware 25 und die Lenkungsplattformsoftware 27 jeweils dazu ausgebildet, Anweisungen der Feedbackanwendungssoftware 28 umzusetzen. Die Feedbackanwendungssoftware 28 ist dazu ausgebildet, hardwareferne, benutzernahe Anweisungen umzusetzen. Insbesondere umfasst die Feedbackanwendungssoftware 28 auch die Funktionen einer Lenkungsanwendungssoftware, sodass mittels der Feedbackanwendungssoftware 28 vorteilhafterweise ein Signal zur Ansteuerung des Lenkungsmotors 10 berechnet wird. Im Gegensatz zu bekannten Steer-by-Wire-Lenksystemen, bei denen jedes Steuergerät eine eigene, an die Anforderungen des jeweiligen Steuergeräts angepasste Anwendungssoftware aufweist, fungiert die Feedbackanwendungssoftware 28 als die gemeinsame Anwendungssoftware des Feedbackaktuators 4 und des Lenkungsaktuators 5. Dadurch, dass die beiden Steuergeräte 9, 11 über die Informationsschnittstelle 24 miteinander verbunden sind, bedarf es lediglich einer einzigen Anwendungssoftware, nämlich in dieser Ausführung der Feedbackanwendungssoftware 28.

### Bezugszeichenliste

- 1: Steer-by-Wire-Lenksystem
- 2: Lenksäule
- 3: Lenkspindel
- 4: Feedbackaktuator
- 5: Lenkungsaktuator
- 6: Fahrzeugrad
- 7: Lenkrad
- 8: Feedbackmotor
- 9: Feedbacksteuergerät
- 10: Lenkungsmotor
- 11: Lenkungssteuergerät
- 12: Datenübertragungseinrichtung
- 13: Riemengetriebe
- 14: Riemenantriebsrad
- 15: Riemenabtriebsrad
- 16: Treibriemen
- 17: Koppelstange
- 18: Spurstange
- 19: Straße
- 20: Feedbackinverter
- 21: Feedbacksensor
- 22: Lenkungsinverter
- 23: Lenkungssensor
- 24: Informationsschnittstelle
- 25: Feedbackplattformsoftware
- 26: Lenkungsanwendungssoftware
- 27: Lenkungsplattformsoftware
- 28: Feedbackanwendungssoftware

## Patentansprüche

1. Steer-by-Wire-Lenksystem (1) für ein Kraftfahrzeug, umfassend eine drehbar gelagerte Lenkspindel (3), einen Feedbackaktuator (4) mit einem Feedbackmotor (8) zur Einwirkung auf die Lenkspindel (3), einen Lenkungsaktuator (5) mit einem Lenkungsmotor (10) zur Einwirkung auf die gelenkten Räder (6) des Kraftfahrzeugs in Abhängigkeit von der Drehung der Lenkspindel (3) und zwei Steuereinheiten (9, 11) zur Ansteuerung des Feedbackmotors (8) und des Lenkungsmotors (10), wobei eine erste Steuereinheit (9) der zwei Steuereinheiten und eine zweite Steuereinheit (11) der zwei Steuereinheiten zueinander verschiedene Komplexitäten aufweisen, wobei die erste Steuereinheit (9) ausgebildet ist, erste Sensorsignale zu empfangen, die ersten Sensorsignale aufzubereiten und aus den aufbereiteten ersten Sensorsignalen ein erstes Motorsteuersignal zu bestimmen, wobei die zweite Steuereinheit (11) ausgebildet ist, zweite Sensorsignale zu empfangen, **dadurch gekennzeichnet, dass** die zweite Steuereinheit (11) ausgebildet ist, zweite Sensorsignale aufzubereiten und die aufbereiteten zweiten Sensorsignale an die erste Steuereinheit (9) weiterzuleiten, und dass die erste Steuereinheit (9) weiter ausgebildet ist, die aufbereiteten zweiten Sensorsignale zu empfangen und aus den aufbereiteten zweiten Sensorsignalen ein zweites Motorsteuersignal zu bestimmen.

2. Steer-by-Wire-Lenksystem (1) nach Anspruch 1, **dadurch gekennzeichnet, dass** die erste Steuereinheit (9) und die zweite Steuereinheit (11) zueinander verschiedene Softwarekomplexitäten und/oder Hardwarekomplexitäten aufweisen, wobei die erste Steuereinheit (9) insbesondere eine leistungsfähigere Hardware umfasst als die zweite Steuereinheit (11).

3. Steer-by-Wire-Lenksystem (1) nach Anspruch 1 oder Anspruch 2, **dadurch gekennzeichnet, dass** die erste Steuereinheit (9) und die zweite Steuereinheit (11) zum Austausch von Signalen miteinander verbunden sind.

4. Steer-by-Wire-Lenksystem (1) nach einem der vorstehenden Ansprüche, **dadurch gekennzeichnet, dass** die erste Steuereinheit (9) zur Ausführung einer High-Level-Software ausgebildet ist und die zweite Steuereinheit (11) zur Ausführung einer Low-Level-Software ausgebildet ist.

5. Steer-by-Wire-Lenksystem (1) nach einem der vorstehenden Ansprüche, **dadurch gekennzeichnet, dass** die erste Steuereinheit (9) in die Bestimmung eines Motorsteuersignals zur Ansteuerung des Feedbackmotors (8) und des Lenkungsmotors (10) eingebunden ist, und die zweite Steuereinheit (11) in die Bestimmung eines Motorsteuersignals zur Ansteuerung des Feedbackmotors (8) oder des Lenkungsmotors (10) eingebunden ist.

6. Steer-by-Wire-Lenksystem (1) nach einem der vorstehenden Ansprüche, **dadurch gekennzeichnet, dass** die erste Steuereinheit (9) weiter ausgebildet ist, das bestimmte zweite Motorsteuersignal an die zweite Steuereinheit (11) weiterzuleiten.

7. Steer-by-Wire-Lenksystem (1) nach einem der vorstehenden Ansprüche, **dadurch gekennzeichnet, dass** die erste Steuereinheit (9) ausgebildet ist, bei einem Ausfall der zweiten Steuereinheit (11) die Funktion der zweiten Steuereinheit (11) zu übernehmen.

8. Steer-by-Wire-Lenksystem (1) nach einem der vorstehenden Ansprüche, **dadurch gekennzeichnet, dass** die erste Steuereinheit (9) zur Ansteuerung des Feedbackmotors (8) ausgebildet ist und die zweite Steuereinheit (11) zur Ansteuerung des Lenkungsmotors (10) ausgebildet ist, und dass die erste Steuereinheit (9) eine Feedbackplattformsoftware (25), eine Feedbackanwendungssoftware (28) und eine Lenkungsanwendungssoftware (26) umfasst, und dass die zweite Steuereinheit eine Lenkungsplattformsoftware (27) umfasst, wobei die Feedbackplattformsoftware (25) und die Lenkungsplattformsoftware (27) jeweils dazu ausgebildet sind, hardwarenahe, benutzerferne Anweisungen umzusetzen, und wobei die Feedbackanwendungssoftware (28) und die Lenkungsanwendungssoftware (26) jeweils dazu ausgebildet sind, hardwareferne, benutzernahe Anweisungen umzusetzen.

9. Steer-by-Wire-Lenksystem (1) nach einem der Ansprüche 1 bis 8, **dadurch gekennzeichnet, dass** das die erste Steuereinheit (9) zur Ansteuerung des Lenkungsmotors (10) ausgebildet ist und die zweite Steuereinheit (11) zur Ansteuerung des Feedbackmotors (8) ausgebildet ist.

10. Steer-by-Wire-Lenksystem (1) nach Anspruch 9, **dadurch gekennzeichnet, dass** die erste Steuereinheit (9) eine Lenkungsplattformsoftware (27), eine Lenkungsanwendungssoftware (26) und eine Feedbackanwendungssoftware (28) umfasst, und dass die zweite Steuereinheit eine Feedbackplattformsoftware (25) umfasst, wobei die Feedbackplattformsoftware (25) und die Lenkungsplattformsoftware (27) jeweils dazu ausgebildet sind, hardwarenahe, benutzerferne Anweisungen umzusetzen, und wobei die Feedbackanwendungssoftware (28) und die Lenkungsanwendungssoftware (26) jeweils dazu ausgebildet sind, hardwareferne, benutzernahe Anweisungen umzusetzen.

11. Steer-by-Wire-Lenksystem (1) nach einem der vorstehenden Ansprüche, **dadurch gekennzeichnet, dass** die erste Steuereinheit (9) eine Schnittstelle zum Anschließen der ersten Steuereinheit (9) an einen Kommunikationsbus eines Kraftfahrzeugs aufweist, wobei von der ersten Steuereinheit (9) und der zweiten Steuereinheit (11) ausschließlich die erste Steuereinheit (9) ausgebildet ist, über den Kommunikationsbus Signale auszutauschen.

12. Verfahren zum Betreiben eines Steer-by-Wire-Lenksystems (1) nach einem der vorgenannten Ansprüche, **dadurch gekennzeichnet, dass** die erste Steuereinheit (9) und die zweite Steuereinheit (11) zueinander verschieden komplexe Prozeduren ausführen, wobei die erste Steuereinheit (9) sämtliche Rechnungen für die Bestimmung eines ersten Motorsteuersignals und sämtliche Rechnungen für die Bestimmung eines zweiten Motorsteuersignals durchführt, die erste Steuereinheit (9) Ergebnisse der Rechnungen für die Bestimmung des zweiten Motorsteuersignals an die zweite Steuereinheit weiterleitet, und die zweite Steuereinheit (11) diese Rechnungen nicht ausführt, sondern die Ergebnisse der Rechnungen für die Bestimmung des zweiten Motorsteuersignals empfängt und das zweite Motorsteuersignal bereitstellt.

13. Verfahren nach Anspruch 12, **dadurch gekennzeichnet, dass** die erste Steuereinheit (9) erste Sensorsignale empfängt, die ersten Sensorsignale aufbereitet und aus den aufbereiteten ersten Sensorsignalen ein erstes Motorsteuersignal bestimmt, dass die zweite Steuereinheit (11) zweite Sensorsignale empfängt, aufbereitet und die aufbereiteten zweiten Sensorsignale an die erste Steuereinheit (9) weiterleitet, und dass die erste Steuereinheit (9) die aufbereiteten zweiten Sensorsignale empfängt und aus den aufbereiteten zweiten Sensorsignalen ein zweites Motorsteuersignal bestimmt.

14. Verfahren nach Anspruch 13, **dadurch gekennzeichnet, dass** die erste Steuereinheit (9) das bestimmte zweite Motorsteuersignal an die zweite Steuereinheit (11) weiterleitet.

15. Verfahren nach einem der Ansprüche 12 bis 14, **dadurch gekennzeichnet, dass** die erste Steuereinheit (9) dem Feedbackaktuator (4) zugeordnet ist und die zweite Steuereinheit (11) dem Lenkungsaktuator (5) zugeordnet ist, wobei das erste Motorsteuersignal ein Signal zur Steuerung des Feedbackmotors (8) ist und das zweite Motorsteuersignal ein Signal zur Steuerung des Lenkungsmotors (10) ist;
oder **dass**
die erste Steuereinheit (9) dem Lenkungsaktuator (5) zugeordnet ist und die zweite Steuereinheit (11) dem Feedbackaktuator (4) zugeordnet ist, wobei das erste Motorsteuersignal ein Signal zur Steuerung des Lenkungsmotors (10) ist und das zweite Motorsteuersignal ein Signal zur Steuerung des Feedbackmotors (8) ist.

## Claims

1. Steer-by-wire steering system (1) for a motor vehicle, comprising a rotatably mounted steering spindle (3), a feedback actuator (4) with a feedback motor (8) for acting on the steering spindle (3), a steering actuator (5) with a steering motor (10) for acting on the steered wheels (6) of the motor vehicle in dependence on the rotation of the steering spindle (3), and two control units (9, 11) for controlling the feedback motor (8) and the steering motor (10), wherein a first control unit (9) of the two control units and a second control unit (11) of the two control units have different levels of complexity, wherein the first control unit (9) is designed to receive first sensor signals, process the first sensor signals and determine a first motor control signal from the processed first sensor signals, wherein the second control unit (11) is designed to receive second sensor signals, **characterised in that** the second control unit (11) is designed to process the second sensor signals and to forward the processed second sensor signals to the first control unit (9), and **in that** the first control unit (9) is further designed to receive the processed second sensor signals and determine a second motor control signal from the processed second sensor signals.

2. Steer-by-wire steering system (1) according to claim 1, **characterised in that** the first control unit (9) and the second control unit (11) have different software complexities and/or hardware complexities, wherein the first control unit (9) comprises, in particular, more powerful hardware than the second control unit (11).

3. Steer-by-wire steering system (1) according to claim 1 or claim 2, **characterised in that** the first control unit (9) and the second control unit (11) are connected to each other for the exchange of signals.

4. Steer-by-wire steering system (1) according to one of the preceding claims, **characterised in that** the first control unit (9) is designed to execute high-level software and the second control unit (11) is designed to execute low-level software.

5. Steer-by-wire steering system (1) according to one of the preceding claims, **characterised in that** the first control unit (9) is integrated into the determination of a motor control signal for controlling the feedback motor (8) and the steering motor (10), and the second control unit (11) is integrated in determining a motor control signal for controlling the feedback motor (8) or the steering motor (10).

6. Steer-by-wire steering system (1) according to one of the preceding claims, **characterised in that** the first control unit (9) is further designed to forward the determined second motor control signal to the second control unit (11).

7. Steer-by-wire steering system (1) according to one of the preceding claims, **characterised in that** the first control unit (9) is designed to take over the function of the second control unit (11) in the event of a failure of the second control unit (11).

8. Steer-by-wire steering system (1) according to one of the preceding claims, **characterised in that** the first control unit (9) is designed to control the feedback motor (8) and the second control unit (11) is designed to control the steering motor (10), and that the first control unit (9) comprises feedback platform software (25), feedback application software (28) and steering application software (26), and that the second control unit comprises steering platform software (27), wherein the feedback platform software (25) and the steering platform software (27) are each designed to implement hardware-oriented, user-remote instructions, and wherein the feedback application software (28) and the steering application software (26) are each designed to implement hardware-remote, user-oriented instructions.

9. Steer-by-wire steering system (1) according to any of claims 1 to 8, **characterised in that** the first control unit (9) is designed to control the steering motor (10) and the second control unit (11) is designed to control the feedback motor (8).

10. Steer-by-wire steering system (1) according to claim 9, **characterised in that** the first control unit (9) comprises steering platform software (27), steering application software (26) and feedback application software (28), and **in that** the second control unit comprises feedback platform software (25), wherein the feedback platform software (25) and the steering platform software (27) are each designed to implement hardware-oriented, user-remote instructions, and wherein the feedback application software (28) and the steering application software (26) are each designed to implement hardware-remote, user-oriented instructions.

11. Steer-by-wire steering system (1) according to one of the preceding claims, **characterised in that** the first control unit (9) has an interface for connecting the first control unit (9) to a communication bus of a motor vehicle, wherein of the first control unit (9) and the second control unit (11), only the first control unit (9) is designed to exchange signals via the communication bus.

12. Method for operating a steer-by-wire steering system (1) according to one of the preceding claims, **characterised in that** the first control unit (9) and the second control unit (11) perform procedures of different complexity with respect to each other, wherein the first control unit (9) performs all calculations for determining a first motor control signal and all calculations for determining a second motor control signal, the first control unit (9) forwards results of the calculations for determining the second motor control signal to the second control unit, and the second control unit (11) does not perform these calculations, but receives the results of the calculations for determining the second motor control signal and provides the second motor control signal.

13. Method according to claim 12, **characterised in that** the first control unit (9) receives first sensor signals, processes the first sensor signals and determines a first motor control signal from the processed first sensor signals,
the second control unit (11) receives second sensor signals, processes them and forwards the processed second sensor signals to the first control unit (9),
and the first control unit (9) receives the processed second sensor signals and determines a second motor control signal from the processed second sensor signals.

14. Method according to claim 13, **characterised in that** the first control unit (9) forwards the determined second motor control signal to the second control unit (11).

15. Method according to one of claims 12 to 14, **characterised in that** the first control unit (9) is assigned to the feedback actuator (4) and the second control unit (11) is assigned to the steering actuator (5), wherein the first motor control signal is a signal for controlling the feedback motor (8) and the second motor control signal is a signal for controlling the steering motor (10);
or **in that**
the first control unit (9) is assigned to the steering actuator (5) and the second control unit (11) is assigned to the feedback actuator (4), wherein the first motor control signal is a signal for controlling the steering motor (10) and the second motor control signal is a signal for controlling the feedback motor (8).

## Revendications

1. Système de direction à commande électrique (1) pour un véhicule automobile, comprenant un arbre de direction (3) monté de manière rotative, un actionneur de retour d'effort (4) avec un moteur de retour d'effort (8) pour agir sur l'arbre de direction (3), un actionneur de direction (5) avec un moteur de direction (10) pour agir sur les roues directrices (6) du véhicule automobile en fonction de la rotation de l'arbre de direction (3) et deux unités de commande (9, 11) pour commander le moteur de retour d'effort (8) et le moteur de direction (10), une première unité de commande (9) des deux unités de commande et une deuxième unité de commande (11) des deux unités de commande présentent des complexités différentes l'une par rapport à l'autre, la première unité de commande (9) étant conçue pour recevoir des premiers signaux de capteur, à traiter les premiers signaux de capteur et à déterminer un premier signal de commande du moteur à partir des premiers signaux de capteur traités, la deuxième unité de commande (11) étant conçue pour recevoir des deuxièmes signaux de capteur, **caractérisé en ce que** la deuxième unité de commande (11) est conçue pour traiter des deuxièmes signaux de capteur et pour transmettre les deuxièmes signaux de capteur traités à la première unité de commande (9), et **en ce que** la première unité de commande (9) est en outre conçue pour recevoir les deuxièmes signaux de capteur traités et pour déterminer un deuxième signal de commande du moteur à partir des deuxièmes signaux de capteur traités.

2. Système de direction à commande électrique (1) selon la revendication 1, **caractérisé en ce que** la première unité de commande (9) et la deuxième unité de commande (11) présentent des complexités logicielles et/ou matérielles différentes l'une de l'autre, la première unité de commande (9) comprenant en particulier un matériel plus performant que la deuxième unité de commande (11).

3. Système de direction à commande électrique (1) selon la revendication 1 ou la revendication 2, **caractérisé en ce que** la première unité de commande (9) et la deuxième unité de commande (11) sont reliées entre elles pour échanger des signaux.

4. Système de direction à commande électrique (1) selon l'une des revendications précédentes, **caractérisé en ce que** la première unité de commande (9) est conçue pour exécuter un logiciel de haut niveau et la deuxième unité de commande (11) est conçue pour exécuter un logiciel de bas niveau.

5. Système de direction à commande électrique (1) selon l'une des revendications précédentes, **caractérisé en ce que** la première unité de commande (9) est intégrée dans la détermination d'un signal de commande du moteur pour commander le moteur de retour d'effort (8) et du moteur de direction (10), et la deuxième unité de commande (11) est intégrée dans la détermination d'un signal de commande du moteur pour commander le moteur de retour d'effort (8) ou le moteur de direction (10).

6. Système de direction à commande électrique (1) selon l'une des revendications précédentes, **caractérisé en ce que** la première unité de commande (9) est en outre conçue pour transmettre le deuxième signal de commande du moteur déterminé à la deuxième unité de commande (11).

7. Système de direction à commande électrique (1) selon l'une des revendications précédentes, **caractérisé en ce que** la première unité de commande (9) est conçue pour prendre le relais de la deuxième unité de commande (11) en cas de défaillance de celle-ci.

8. Système de direction à commande électrique (1) selon l'une des revendications précédentes, **caractérisé en ce que** la première unité de commande (9) est conçue pour commander le moteur de retour d'effort (8) et la deuxième unité de commande (11) est conçue pour commander le moteur de direction (10), et **en ce que** la première unité de commande (9) comprend un logiciel de plate-forme de retour d'effort (25), un logiciel d'application de retour d'effort (28) et un logiciel d'application de direction (26), et **en ce que** la deuxième unité de commande comprend un logiciel de plate-forme de direction (27), le logiciel de plate-forme de retour d'effort (25) et le logiciel de plate-forme de direction (27) étant chacun conçu pour mettre en œuvre des instructions proches du matériel et éloignées de l'utilisateur, et dans lequel le logiciel d'application de retour d'effort (28) et le logiciel d'application de direction (26) sont chacun conçus pour mettre en œuvre des instructions éloignées du matériel et proches de l'utilisateur.

9. Système de direction à commande électrique (1) selon l'une des revendications 1 à 8, **caractérisé en ce que** la première unité de commande (9) est conçue pour commander le moteur de direction (10) et la deuxième unité de commande (11) est conçue pour commander le moteur de retour d'effort (8).

10. Système de direction à commande électrique (1) selon la revendication 9, **caractérisé en ce que** la première unité de commande (9) comprend un logiciel de plate-forme de direction (27), un logiciel d'application de direction (26) et un logiciel d'application de retour d'effort (28), et **en ce que** la deuxième unité de commande comprend un logiciel de plate-forme de retour d'effort (25), le logiciel de plate-forme de retour d'effort (25) et le logiciel de plate-forme de direction (27) étant chacun conçu pour mettre en œuvre des instructions proches du matériel et éloignées de l'utilisateur, et le logiciel d'application de retour d'effort (28) et le logiciel d'application de direction (26) étant chacun conçu pour mettre en œuvre des instructions éloignées du matériel et proches de l'utilisateur.

11. Système de direction à commande électrique (1) selon l'une des revendications précédentes, **caractérisé en ce que** la première unité de commande (9) comporte une interface pour connecter la première unité de commande (9) à un bus de communication d'un véhicule automobile, parmi la première unité de commande (9) et la deuxième unité de commande (11), seule la première unité de commande (9) est conçue pour échanger des signaux via le bus de communication.

12. Procédé pour faire fonctionner un système de direction à commande électrique (1) selon l'une des revendications précédentes, **caractérisé en ce que** la première unité de commande (9) et la deuxième unité de commande (11) exécutent des procédures de complexité différente l'une par rapport à l'autre, la première unité de commande (9) effectuant tous les calculs pour la détermination d'un premier signal de commande du moteur et tous les calculs pour la détermination d'un deuxième signal de commande du moteur, la première unité de commande (9) transmet les résultats des calculs pour la détermination du deuxième signal de commande du moteur à la deuxième unité de commande, et la deuxième unité de commande (11) n'effectue pas ces calculs, mais reçoit les résultats des calculs pour la détermination du deuxième signal de commande du moteur et fournit le deuxième signal de commande du moteur.

13. Procédé selon la revendication 12, **caractérisé en ce que** la première unité de commande (9) reçoit des premiers signaux de capteur, traite les premiers signaux de capteur et détermine un premier signal de commande du moteur à partir des premiers signaux de capteur traités,
**en ce que** la deuxième unité de commande (11) reçoit des deuxièmes signaux de capteur, les traite et transmet les deuxièmes signaux de capteur traités à la première unité de commande (9),
et **en ce que** la première unité de commande (9) reçoit les deuxièmes signaux de capteur traités et détermine un deuxième signal de commande du moteur à partir des deuxièmes signaux de capteur traités.

14. Procédé selon la revendication 13, **caractérisé en ce que** la première unité de commande (9) transmet le deuxième signal de commande du moteur déterminé à la deuxième unité de commande (11).

15. Procédé selon l'une des revendications 12 à 14, **caractérisé en ce que** la première unité de commande (9) est associée à l'actionneur de retour d'effort (4) et la deuxième unité de commande (11) est associée à l'actionneur de direction (5), le premier signal de commande du moteur étant un signal pour commander le moteur de retour d'effort (8) et le deuxième signal de commande du moteur étant un signal pour commander le moteur de direction (10) ;
ou **en ce que**
la première unité de commande (9) est associée à l'actionneur de direction (5) et la deuxième unité de commande (11) est associée à l'actionneur de retour d'effort (4), le premier signal de commande du moteur étant un signal destiné à commander le moteur de direction (10) et le deuxième signal de commande du moteur étant un signal destiné à commander le moteur de retour d'effort (8).
